# FASCICULE DE BREVET EUROPEEN

(11) **EP 1 634 800 B1**
(45) Date de publication et mention de la délivrance du brevet: **25.08.2010**
(21) Numéro de dépôt: 05291416.5
(22) Date de dépôt: 30.06.2005
(51) Int. Cl.: B62D 25/08, B60Q 1/04

(54) **Ensemble de bloc-avant pour un véhicule automobile**
Fronteinheit für ein Kraftfahrzeug
Front module for vehicle

(30) Priorité: 02.08.2004 FR 0408532
(43) Date de publication de la demande: 15.03.2006
(73) Titulaire: Faurecia Bloc Avant, 92000 Nanterre (FR)
(72) Inventeur: Bierjon, Didier, 25400 Audincourt (FR); Mary, Raphael, 85110 Schelldorf (DE)
(74) Mandataire: Lanceplaine, Jean-Claude

(56) Documents cités:
- EP-A- 1 232 932
- FR-A- 2 827 251

## Description

La présente invention concerne un ensemble de bloc-avant de véhicule automobile.

On connaît dans le document EP-A61 293 932, un ensemble de bloc-ayant de véhicule automobile comprenant une face avant, qui présente une partie centrale et deux parties latérales, une peau de pare-chocs, deux poutres flexibles s'étendant latéralement et formant des supports de la peau de pare-chocs, dont chacune a une première extrémité reliée à la partie centrale de la face avant et une seconde extrémité destinée à être reliée à une partie avant d'une aile de carrosserie du véhicule et deux blocs optiques, dont chacun est fixé rigidement à une poutre respective.

L'ensemble décrit dans ce document permet un positionnement automatique et permanent des contours visibles des blocs optiques par rapport aux extrémités d'aile correspondantes et à la peau de pare-chocs.

Dans le même temps, cet ensemble assure un positionnement relatif précis des extrémités d'ailes et de la peau de pare-chocs.

Dans ce document, le bloc optique, l'extrémité avant de l'aile et la peau de pare-chocs sont fixés en un même point sur chaque poutre flexible ce qui réduit les possibilités d'ajustement automatique après assemblage de ces éléments entre eux.

Or, il peut être également souhaitable, pour améliorer les qualités esthétiques du véhicule, d'assurer une continuité d'aspect des blocs optiques et de la peau de pare-chocs avec d'autres éléments de carrosserie, comme par exemple le capot du véhicule automobile.

De plus, selon le style du véhicule, les peaux de pare-chocs ont des formes variées si bien que dans certains cas, elles ne sont plus compatibles avec les fixations prévues sur les faces avant techniques, ce qui entraîne, pour chaque forme de peau de pare-chocs, une face avant particulière, et de fait, un nombre important de pièces à gérer.

Le document FR-A-2 827 251 décrit un véhicule automobile et un ensemble de bloc-avant de ce véhicule tel que décrit par le préambule de la revendication 1, et comportant deux projecteurs, une peau de pare-chocs, deux pièces de maintien et une traverse. Chaque pièce de maintien comporte une base et, à chacune de ses extrémités, deux bras s'étendant vers le haut. Les extrémités des bras sont fixées respectivement à un prolongement de la traverse et à l'extrémité de cette traverse. Chaque projecteur est en appui sur le bord supérieur de la peau de pare-chocs qui est lui-même en appui sur la base de la pièce de maintien correspondante.

L'invention a donc pour but de proposer un ensemble de bloc-avant qui évite ces inconvénients et dont les différents éléments constitués par les blocs optiques et la peau de pare-chocs peuvent être automatiquement réglés et bloqués en position, pour assurer une continuité d'aspect entre eux.

L'invention a pour objet un ensemble de bloc-avant de véhicule automobile comprenant :
- une face avant rigide présentant une partie centrale et deux parties latérales,
- une peau de pare-chocs,
- deux poutres flexibles s'étendant latéralement et comportant chacune une première extrémité reliée à la partie centrale de la face avant, une seconde extrémité reliée à une partie avant d'une aile de carrosserie et, entre ces deux extrémités, une portion centrale sur laquelle est fixé rigidement un bloc optique,
caractérisé en ce que la première extrémité de chaque poutre est munie d'une extension s'étendant au-dessus ou au-dessous de la portion centrale de la poutre flexible correspondante, sur laquelle est fixée la peau de pare-chocs et dont l'orientation par rapport à la portion centrale de cette poutre est déterminée en fonction de la forme de la peau de pare-chocs.

Selon d'autres caractéristiques de l'invention :
- l'extension s'étend au-dessus de la portion centrale de la poutre flexible correspondante,
- l'extension s'étend sensiblement dans le prolongement de la portion centrale de la poutre flexible correspondante, et
- l'extension s'étend au-dessous de la portion centrale de la poutre flexible correspondante.

L'invention sera mieux comprise à la lecture de la description qui va suivre, donnée à titre d'exemple et faite en se référant aux dessins annexés, sur lesquels :
- la Fig. 1 est une vue schématique en perspective d'un ensemble de bloc-avant, conforme à l'invention,
- la Fig. 2 est une vue schématique en perspective éclatée des différents éléments composant l'ensemble de bloc avant, conforme à l'invention,
- la Fig. 3 est une vue schématique en perspective de la face avant de l'ensemble de bloc-avant, conforme à l'invention,
- la Fig. 4 est une vue schématique en perspective d'un premier mode de réalisation d'une poutre flexible de l'ensemble de bloc-avant, conforme à l'invention,
- la Fig. 5 est une vue schématique en perspective d'une peau de pare-chocs et d'un deuxième mode de réalisation d'une poutre flexible correspondante de l'ensemble de bloc-avant, conforme à l'invention, et
- la Fig. 6 est une vue schématique en perspective d'une peau de pare-chocs et d'un troisième mode de réalisation d'une poutre flexible correspondante de l'ensemble de bloc-avant, conforme à l'invention.

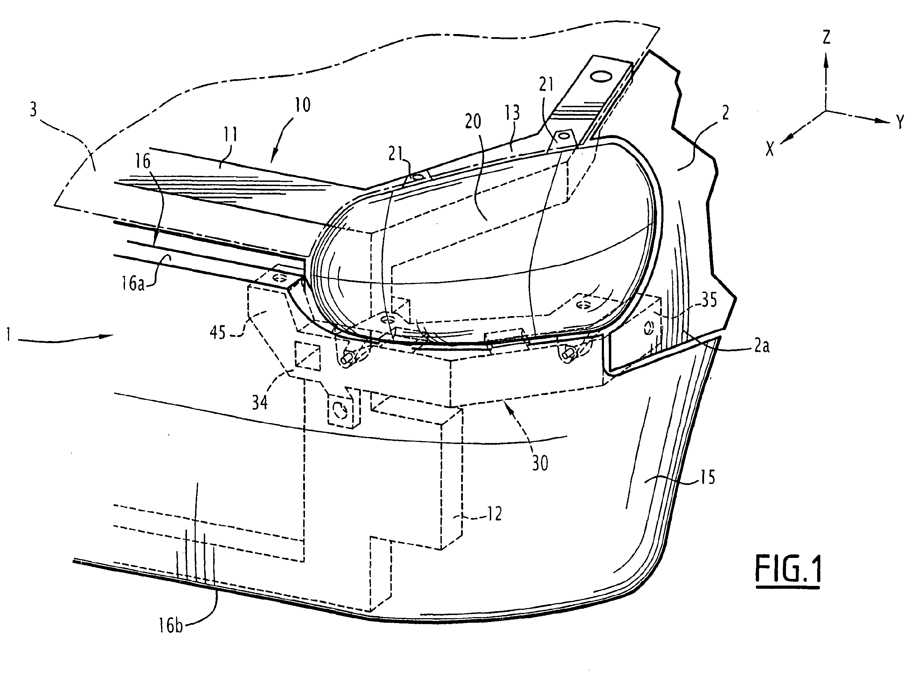

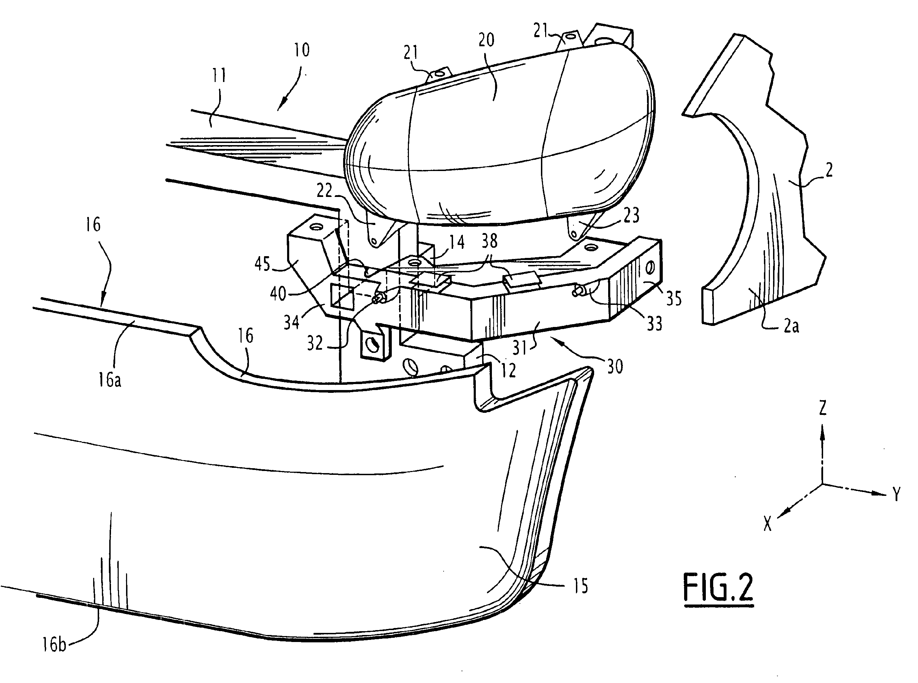

Sur les Figs. 1 et 2, on a représenté schématiquement une partie avant d'un véhicule automobile comprenant un ensemble de bloc-avant 1 représenté partiellement, une extrémité avant 2 d'une aile de carrosserie et une extrémité avant 3 d'un capot.

Les Figs. 1 et 2 ont été orientées suivant trois axes X, Y et Z qui correspondent à l'orientation usuelle d'un véhicule automobile, à savoir respectivement l'axe longitudinal X orienté dans la direction de marche avant, l'axe transversal Y orienté de droite à gauche, du point de vue du conducteur, et l'axe vertical Z orienté de bas en haut. Tous les termes utilisés dans la suite de description, pouvant indiquer un sens ou un positionnement, doivent être compris en référence à ce système d'axes.

La partie avant du véhicule représentée sur les Figs. 1 et 2 est symétrique ou quasi-symétrique par rapport à un plan médian vertical du véhicule si bien que, dans un but de clarté, la description qui suit sera faite pour un côté de cette partie avant, l'autre côté étant identique.

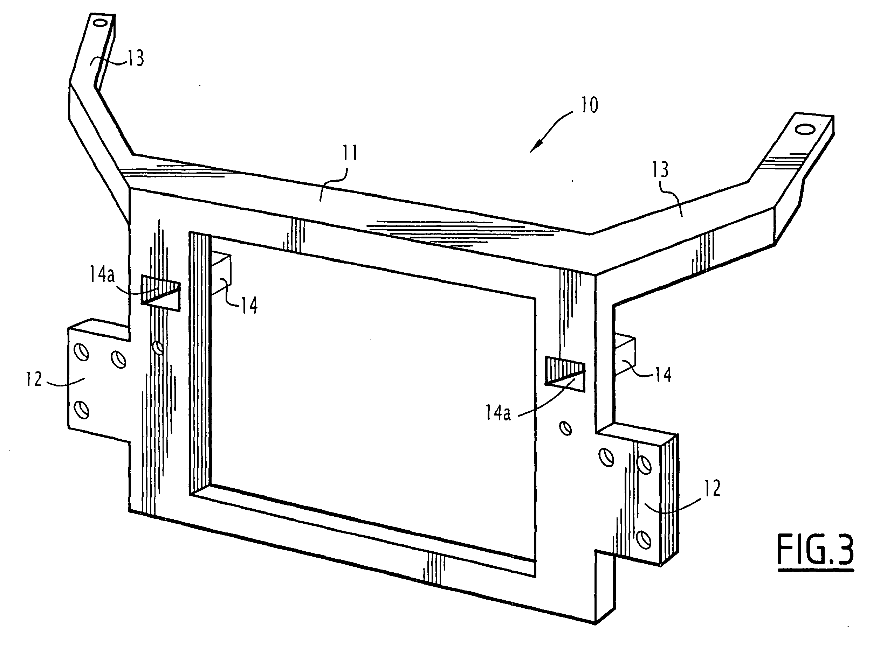

L'ensemble de bloc-avant 1 du véhicule comporte une structure essentiellement rigide constituée par une face avant désignée par la référence générale 10 et qui présente une partie centrale 11 ayant la forme générale d'un cadre et, de chaque côté, une partie latérale 12, ainsi que montrée à la Fig. 3.

L'ensemble de bloc-avant 1 comporte aussi une peau de pare-chocs 15, réalisée par exemple d'une pièce de matériau plastique, disposée sur toute la largeur de la face avant 10, comme montré à la Fig. 1, en dépassant latéralement des parties latérales 12 de la face avant 10, et en s'appliquant sur un bord d'une extrémité avant 2a d'une aile 2 en coïncidence avec celui-ci.

L'ensemble de bloc-avant 1 comporte, de plus, de chaque côté latéral, un bloc optique 20 monté sur la face avant 10 dans des formes complémentaires ménagées dans l'aile 2, le capot 3 et la peau de pare-chocs 15, au-dessous d'un prolongement supérieur 13 de la face avant 10 et au-dessus d'un bord supérieur 16 de la peau de pare-chocs 15, ainsi que représenté sur les Figs. 1 et 2.

Le bloc optique 20 est fixé sur le prolongement latéral 13 par exemple au moyen de deux pattes 21.

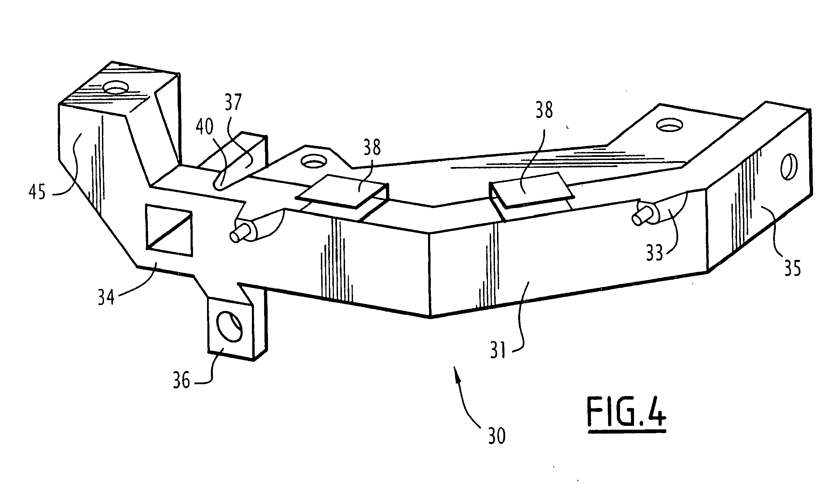

L'ensemble de bloc-avant 1 comporte également, de chaque côté latéral, une poutre flexible et galbée désignée dans son ensemble par la référence 30 et dont un premier mode de réalisation est représenté à plus grande échelle à la Fig. 4. Chaque poutre flexible 30 s'étend essentiellement latéralement dans la direction de la peau de pare-chocs 15 et comporte une partie centrale 31 dont la face avant est pourvue d'un premier pion 32 destiné à coopérer avec une première patte inférieure 22 du bloc optique 20 pour l'indexage de ce bloc optique 20 selon les axes X et Z et d'un second pion 33 destiné à coopérer avec une seconde patte inférieure 23 du bloc optique 20 pour l'indexage selon les axes XYZ de ce bloc optique 20.

La poutre flexible 30 comporte une première extrémité 34 reliée à la partie centrale 11 de la face avant 10 pour obtenir un positionnement selon l'axe Z de cette peau de pare-chocs 15. La poutre flexible 30 comporte une seconde extrémité 35 reliée à la partie avant 2a de la l'aile de carrosserie 2, comme montrée sur la Fig. 1. La partie centrale 31 de la poutre flexible 30 comporte sur son bord inférieur une patte 36 de fixation sur la partie centrale 11 de la face avant 10.

La première extrémité 34 de chaque poutre flexible 30 est réglable selon un premier axe Z et selon un deuxième axe Y sur la partie centrale 11 de la face avant 10 pour un ajustement de chaque bloc optique 20 par rapport à la peau de pare-chocs 15.

A cet effet, le réglage selon ces deux axes est obtenu par des moyens d'indexage comprenant un manchon creux 14, qui, dans l'exemple de réalisation représenté à la Fig. 3, est solidaire de la partie centrale 11 de la face avant 10 et s'étend perpendiculairement à cette face avant 10 en faisant saillie de cette dernière vers l'arrière suivant son axe longitudinal orienté sensiblement suivant l'axe longitudinal X du véhicule. Ce manchon 14 comporte un trou 14a allongé suivant la direction X de l'axe du manchon 14.

Par exemple, le trou 14a présente une section rectangulaire dont les plus grands côtés sont horizontaux. Le trou 14a peut présenter d'autres formes, comme par exemple une forme oblongue.

Par ailleurs, les moyens d'indexage comprennent un doigt 37 prévu sur la poutre 30 et s'étendant perpendiculairement à cette poutre, vers l'arrière du véhicule automobile, suivant son axe longitudinal orienté sensiblement suivant l'axe longitudinal X de ce véhicule. Le doigt 37 est susceptible de coulissement axial dans l'orifice 14a du manchon creux 14.

Dans l'exemple de réalisation représenté sur les figures, le doigt 37 présente une section rectangulaire dont la hauteur est sensiblement égale à la hauteur du trou 14a du manchon 14 et dont la largeur est inférieure à la largeur de ce trou 14a, de façon à permettre au doigt 37 et par conséquent à la poutre flexible 31 correspondante de pouvoir se déplacer selon l'axe transversal Y, tout en étant bloqué selon l'axe Z.

Chaque manchon 14 comprend aussi des moyens, non représentés, de blocage du doigt 37 correspondant selon l'axe X qui permet de solidariser, de façon définitive, avec une possibilité de démontage, le doigt 37 et le manchon 14. Ces moyens de blocage sont constitués par tout dispositif approprié de type classique, comme par exemple une paire vis/écrou ou une goupille.

De plus, chaque poutre flexible 30 comporte des moyens d'indexage selon les axes X et Z de la peau de pare-chocs 15. Ces moyens d'indexage représentés notamment à la Fig. 4, comprennent au moins une portion en creux 38 ménagée sur la partie supérieure de la partie centrale 31 de la poutre 30. Dans l'exemple de réalisation représenté sur cette figure, ladite portion en creux est formée d'au moins une gouttière 38 et par exemple de deux gouttières 38, qui s'étendent transversalement suivant la direction générale de la poutre 30.

Ces moyens d'indexage comprennent au moins une portion en saillie complémentaire ménagée à la partie supérieure de la peau de pare-chocs et qui, dans l'exemple de réalisation montré sur les Figs. 1 et 2, est constituée par le bord supérieur 16 de la peau de pare-chocs 15, de façon à réaliser un accrochage de cette peau de pare-chocs 15 sur chaque poutre 30, avec une possibilité de mouvement relatif d'ajustement suivant la direction générale de cette poutre 30, c'est à dire selon l'axe Y.

Chaque poutre flexible 30 comporte éventuellement une zone de flexion 40 disposée entre la première extrémité 34 et la portion centrale 31 et plus particulièrement entre la première extrémité 34 de fixation de la peau de pare-chocs 15 et la portion centrale 31 sur laquelle est monté le bloc-avant 20 correspondant. Cette zone de flexion est formée par exemple par une encoche 40 sensiblement verticale.

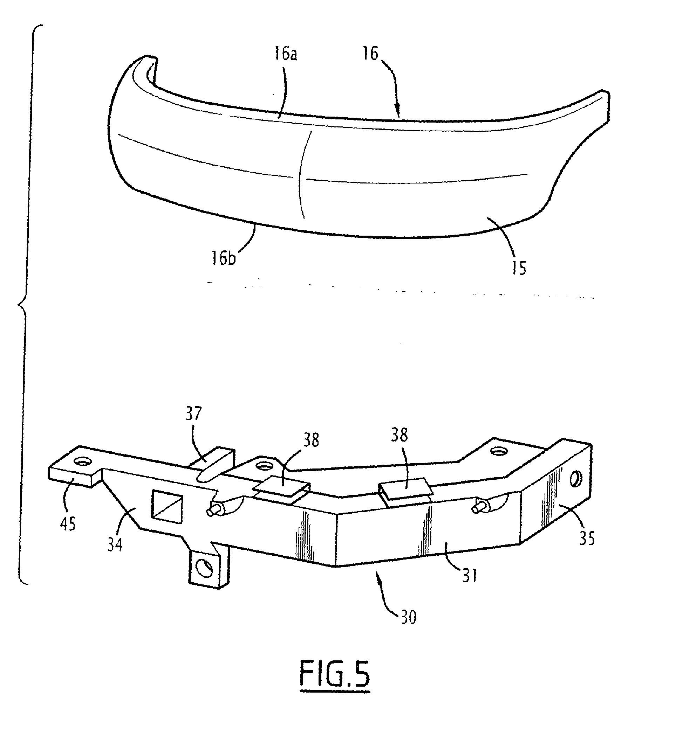

D'une manière générale et comme représenté sur les Figs. 4 à 6, la première extrémité 34 de chaque poutre flexible 30 est munie d'une extension 45 sur laquelle est fixée un bord supérieur 16a d'une partie centrale 16 de la peau de pare-chocs 15 et dont l'orientation par rapport à la portion centrale 31 de chaque poutre flexible 30 est déterminée en fonction de la forme de cette peau de pare-chocs 15.

En effet, et comme représenté sur les Figs. 2, 5 et 6, la peau de pare-chocs 15 peut avoir différentes formes. Ces différences sont déterminées par exemple par une différence de hauteur entre le bord supérieur 16a de la partie centrale 16 et le bord inférieur 16b de la peau de pare-chocs 15.

Selon un premier mode de réalisation représenté sur les Figs. 1, 2 et 4, l'extension 45 de la première extrémité 34 de chaque poutre flexible 30 s'étend au-dessus de la portion centrale 31 de cette poutre flexible pour que le bord supérieur 16a de la partie centrale 16 vienne en appui sur l'extrémité libre de cette extension 45 pour y être fixée.

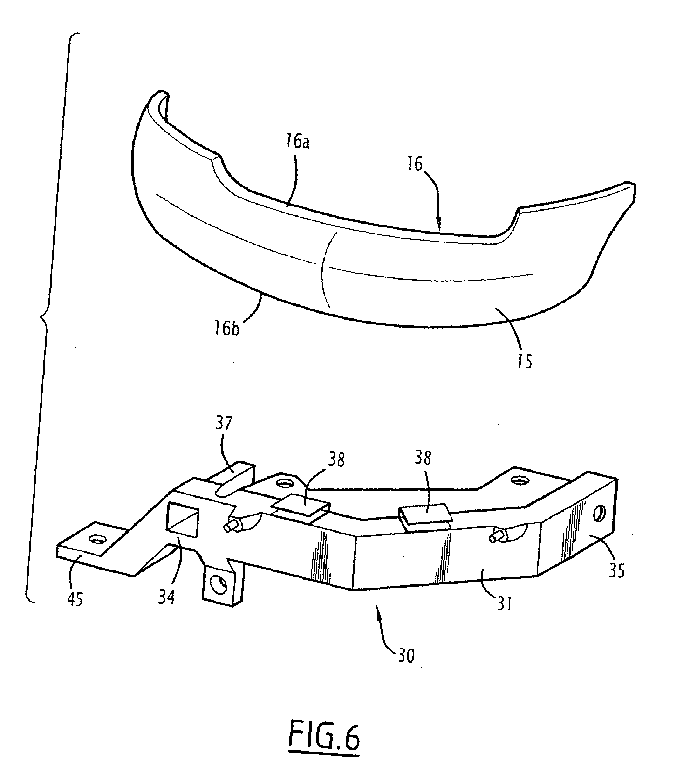

Selon un deuxième mode de réalisation représenté à la Fig. 6, le bord supérieur 16a de la partie centrale 16 de la peau de pare-chocs 15 est, par rapport au bord inférieur 16b de cette pose de pare-chocs 15, a une hauteur encore plus basse que dans le précédent mode de réalisation et, dans ce cas, l'extension 45 de la poutre flexible 30 sur laquelle est fixé ledit bord supérieur 16a de la partie centrale 16, s'étend au-dessous de la portion centrale 31 de la poutre flexible 30 correspondante.

Ainsi, la poutre flexible est adaptée à la forme de la peau de pare-chocs et, par conséquent, au style du véhicule si bien qu'avec un nombre limité de poutres flexibles, il est possible de gérer plusieurs styles avec une même face avant.

Par ailleurs, l'ensemble de bloc-avant selon l'invention permet d'obtenir une qualité esthétique optimale de la partie avant du véhicule, constante dans le temps et ce sans opérations de reprise et d'ajustement supplémentaires, postérieures à l'assemblage du véhicule.

## Revendications

1. Ensemble de bloc-avant de véhicule automobile comprenant :
- une face avant (10) rigide présentant une partie centrale (11) et deux parties latérales (12, 13),
- une peau de pare-chocs (15, 16),
- deux poutres flexibles (30) s'étendant latéralement et comportant une chacune une première extrémité (34) reliée à la partie centrale (11) de la face avant (10), une seconde extrémité (37) reliée à une partie avant (2a) d'une aile de carrosserie (2), et entre ces deux extrémités (34, 37), une portion centrale (31) sur laquelle est fixé rigidement un bloc optique,
**caractérisé en ce que** la première extrémité (34) de chaque poutre (30) est munie d'une extension (45) s'étendant au-dessus ou au-dessous de la portion centrale (31) de la poutre flexible (30) correspondante, sur laquelle est fixée la peau de pare-chocs (15) et dont l'orientation par rapport à la portion centrale (31) de cette poutre flexible (30) est déterminée en fonction de la forme de la peau de pare-chocs (15, 16).

## Claims

1. Front module for a motor vehicle comprising:
- a rigid front face (10) having a central part (11) and two side parts (12, 13),
- a bumper skin (15, 16),
- two flexible beams (30) extending laterally and each comprising a first end (34) attached to the central part (11) of the front face (10), a second end (37) connected to a front part (2a) of a body wing (2), and between these two ends (34, 37) a central portion (31) to which a headlight assembly is rigidly fixed,
**characterised in that** the first end (34) of each beam (30) is provided with an extension (45) extending above or below the central portion (31) of the corresponding flexible beam (30), to which the bumper skin (15) is attached and the orientation of which, in relation to the central portion (31) of said flexible beam (30), is determined as a function of the shape of the bumper skin (15, 16).

## Patentansprüche

1. Fronteinheit für ein Kraftfahrzeug, umfassend:
- eine steife Vorderseite (10) mit einem mittleren Teil (11) und zwei seitlichen Teilen (12, 13),
- eine Stoßfängerhaut (15, 16),
- zwei flexible Träger (30), sich seitlich erstreckend und jeder umfassend: ein erstes Ende (34), verbunden mit dem mittleren Teil (11) der Vorderseite (10), ein zweites Ende (37), verbunden mit einem vorderen Teil (2a) eines Karosserieflügels (2), und, zwischen diesen beiden Enden (34, 37), einen mittleren Abschnitt (31), an dem ein Lichterblock starr befestigt ist,
**dadurch gekennzeichnet, dass** das erste Ende (34) jedes Trägers (30) eine sich oberhalb oder unterhalb des mittleren Abschnitts (31) des entsprechenden flexiblen Trägers (30) erstreckende Verlängerung (45) aufweist, an der die Stoßfängerhaut (15) befestigt ist und deren Ausrichtung in Bezug auf den mittleren Abschnitt (31) dieses flexiblen Trägers (30) entsprechend der Form der Stoßfängerhaut (15, 16) festgelegt ist.
